Europäisches Patentamt

European Patent Office

Office européen des brevets

(19)

(11) Veröffentlichungsnummer: **0 108 286**
**B1**

(12) **EUROPÄISCHE PATENTSCHRIFT**

(45) Veröffentlichungstag der Patentschrift:
**29.10.86**

(51) Int. Cl.⁴: **F 16 K 11/07**

(21) Anmeldenummer: 83110243.9

(22) Anmeldetag: **14.10.83**

(54) **Schieberventildichtung.**

(30) Priorität: **03.11.82 DE 3240552**

(43) Veröffentlichungstag der Anmeldung:
**16.05.84 Patentblatt 84/20**

(45) Bekanntmachung des Hinweises auf die Patenterteilung:
**29.10.86 Patentblatt 86/44**

(84) Benannte Vertragsstaaten:
**AT BE CH DE FR GB IT LI LU NL SE**

(56) Entgegenhaltungen:
**DE - A - 3 002 715**
**DE - A - 3 114 129**
**DE - B - 1 201 638**
**US - A - 3 865 386**

(73) Patentinhaber: **PRÄDIFA Präzisions-Dichtungs-Fabrik GmbH, Arnold-Jäger-Strasse 1, D-7120 Bietigheim-Bissingen (DE)**

(72) Erfinder: **Hörl, Ernst, Ing. grad., Wolfsbergweg 37, D-7121 Freudental (DE)**

(74) Vertreter: **Wolff, Michael, Dipl.-Phys., Kirchheimer Strasse 69, D-7000 Stuttgart 75 (DE)**

ACTORUM AG

## Beschreibung

Die Erfindung betrifft eine mehrteilige Dichtung für in einem zylindrischen Gehäusehohlraum bewegbare Ventilschieber; bestehend aus zwei gleichen, in den Hohlraum eingepassten Distanzringen, mit je einer radial äusseren Umfangsnut, aus je einem in jeder Nut angeordneten O-Ring zur statischen Abdichtung der Distanzringe gegen das Gehäuse und aus einem zweiten Dichtungsring, der mit allen seinen axialen Abschnitten in einem von den Distanzringen und dem Ventilschieber begrenzten Raum angeordnet ist und welcher aus einem elastischen Hauptring mit, gegebenenfalls abgerundeter, radial innerer Dichtkante zur dynamischen Abdichtung gegen den Ventilschieber, aus einem von den beiden Distanzringen eingeklemmten Endteil und aus einem diesen Endteil mit dem Hauptring verbindenden hohlzylindrischen Ansatz am Hauptring besteht, der eine zur inneren Dichtkante konzentrische, gegebenenfalls abgerundete, radial äussere Stützkante zur Abstützung des Hauptringes an einem der Distanzringe aufweist; wobei der Ansatz mit radialem Spiel zwischen den beiden Distanzringen radial eingeschlossen ist.

Bei einer aus der deutschen Gebrauchsmusterschrift 8 110 585 (Prädifa) bekannten Schieberventildichtung dieser Art ist als Endteil ein Ringflansch vorgesehen, der mittels der beiden Distanzringe durch Einklemmen axial festgelegt ist. Der dynamisch dichtende Hauptring dieser Dichtung liegt mit seinen axialen Breitseiten an den beiden Distanzringen an und kann deshalb nicht konisch verformt werden, wenn der Schieber hindurchgeht, worunter die Leichtgängigkeit des Schiebers leidet, ohne dass dadurch die dynamische Abdichtung wesentlich besser wäre. An der bekannten Dichtung ist ausserdem nachteilig, dass die beiden Distanzringe mit eingefügtem zweiten Dichtungsring axial nur von dem Gehäusehohlraum, also in diesem, zusammengehalten werden und daher einzeln in den Gehäusehohlraum eingeführt werden müssen; dadurch wird der Aufwand bei der Herstellung eines Schieberventils erheblich erhöht.

Der Erfindung liegt daher die Aufgabe zugrunde, eine die Nachteile der bekannten Dichtung vermeidende, gleichartige Dichtung zu schaffen, welche bei verbesserter statischer Abdichtung zu einer grösseren Leichtgängigkeit des Schiebers und zu einem geringeren Montageaufwand führt, ohne dass die dynamische Abdichtung darunter leidet. Diese Aufgabe ist bei einer Dichtung der eingangs genannten Art dadurch gelöst, dass der Endteil des Hauptringes des zweiten Dichtungsringes als radial nach innen und aussen über den Ansatz dieses Dichtungsringes vorspringender Ringwulst ausgebildet ist, der in einer radial offenen Ringnut in einem der Distanzringe axial verrastet ist und von dem anderen Distanzring radial belastet wird; und dass der Hauptring mit axialem Spiel zwischen den beiden Distanzringen axial eingeschlossen ist. Dadurch wird vorteilhafterweise erreicht, dass der dynamisch abdichtende Hauptring in jeder der beiden einander entgegengesetzten axialen Richtungen quasi umgestülpt werden und sich dadurch der Schieberichtung anpassen kann, was den Schiebergang erleichtern hilft, zumal der Ansatz radiales Spiel zwischen den beiden Distanzringen hat; und dass der zweite Dichtungsring in mehreren Exemplaren im Wechsel mit je einem Distanzring zu einer sogenannten Kartusche vereinigt werden kann, deren Bestandteile ohne äussere Hilfsmittel zusammenhalten. Zum Bau eines Schieberventiles braucht deshalb lediglich eine Kartusche in ein passendes Gehäuse eingeführt und in die Kartusche ein passender Schieber gesteckt zu werden.

Ein besonderer Vorteil der erfindungsgemässen Dichtung besteht darin, dass der Ringwulst die radiale Toleranz einer Durchmesserpaarung bei je zwei aufeinanderfolgenden Distanzringen ausgleicht. Vorzugsweise wird der Ringwulst unter radialer Vorspannung verrastet, damit er sicher vormontierbar ist.

Bei einer bevorzugten Ausführungsform der erfindungsgemässen Dichtung ist der als Endteil des zweiten Dichtungsringes vorgesehene Ringwulst als O-Ring ausgeformt, so dass dessen bekannte vorteilhafte Wirkungen bei der statischen Abdichtung der Distanzringe gegeneinander eintreten.

Demgegenüber weist ein in einen aus der deutschen Auslegeschrift 1 201 638 bekannten Dichtungskörper für ein Schieberventil integrierter Ringwulst einen quadratischen Querschnitt auf, der eine radial äussere Dichtkante zur statischen Abdichtung gegen ein Gehäuse und eine konzentrische, radial innere Dichtkante zur dynamischen Abdichtung gegen einen Schieber aufweist. Dieser bekannte Ringwulst dient jedoch nicht der ständigen statischen Abdichtung, da er vom Gehäuse abheben und radial der Schieberkontur folgen kann, und nicht der statischen Abdichtung einer axialen Stossstelle zweier axial aufeinanderfolgender Distanzringe.

Bei der bevorzugten Ausführungsform der erfindungsgemässen Dichtung ist die den Ringwulst aufnehmende Ringnut radial nach aussen offen, so dass der Ringwulst auf den radial innenliegenden Überlappungsabschnitt eines der beiden Distanzringe aufgezogen und der Überlappungsabschnitt des anderen Distanzringes über den Ringwulst geschoben werden kann; beides ist unter bequemer Sichtkontrolle möglich.

Im folgenden ist die Erfindung anhand der durch die Zeichnung beispielhaft dargestellten bevorzugten Ausführungsform der erfindungsgemässen Schieberventildichtung im einzelnen erläutert. Es zeigt:

Fig. 1 einen zur Hälfte dargestellten axialen Längsschnitt durch den Hauptteil der Ausführungsform;

Fig. 2 einen beidseitig abgebrochenen axialen Längsschnitt durch ein Wegeventil mit mehrfach vorhandener Ausführungsform; und

Fig. 3 einen Ventildistanzring vergrössert.

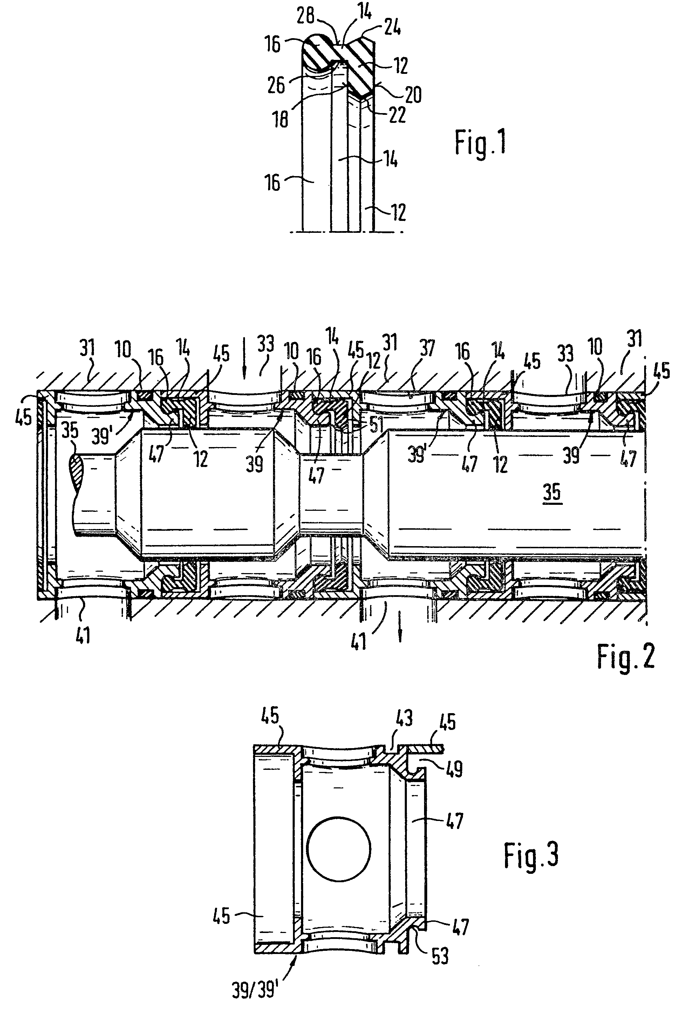

Jede Ausführungsform besteht aus einem O-Ring 10 und gemäss Fig. 1 aus einem Dichtungsring 12, an den mittels eines Ansatzes 14 ein Ringwulst 16 einstückig angeformt ist. Sowohl der Ring 10 als auch das Hauptteil 12, 14, 16 der Dichtung bestehen aus gummielastischem Werkstoff, der verstärkt sein kann.

Der Dichtungsring 12 weist auf seinen axialen Breitseiten zwei planparallele Stirnflächen 18 und 20 sowie eine radial innere Dichtkante 22 und eine konzentrische, radial äussere Stützkante 24 auf, welche je durch eine doppeltkonische Umfangsfläche an den radialen Schmalseiten des kreisrunden Dichtungsrings 12 gebildet sind.

Der kreisrunde Ansatz 14 ist ein zylindrischer Hohlkörper mit einer radial inneren Umfangsfläche 26 und einer koaxialen, radial äusseren Umfangsfläche 28. Er ist in der Nähe der äusseren Stützkante 24 am äusseren Rand der Stirnfläche 18 an den Dichtungsringen 12 angefügt.

Der kreisrunde Ringwulst 16 ist ein zentral an das dem Dichtungsring 12 abgewandte Ende des Ansatzes 14 angefügter O-Ring. Er bildet mit dem Ansatz 14 und dem Dichtungsring 12 eine bauliche Einheit. Der Durchmesser des Ringwulstes 16 ist so gross, dass dieser radial nach aussen über die äussere Stützkante 24 hinausragt und sowohl radial nach innen als auch radial nach aussen den Ansatz 14 überragt.

Das gezeigte Wegeventil gehört dem Typ 4/2 an, weist also in einem kreiszylindrischen Gehäuse 31 vier gesteuerte Anschlüsse 33 und zwei Schaltstellungen eines konturierten kreiszylindrischen Schiebers 35 auf, nämlich zwei Durchflussstellungen, beispielsweise für doppelt-wirkende Zylinder oder Fluidmotoren, mit einer Sperr-Zwischenstellung, die der Schieber in Fig. 2 nach links in die eine Schaltstellung verlassen hat.

Das Gehäuse 31 bildet einen Hohlraum 37, in dem auf seine in Fig. 2 oberen Anschlüsse 33 zentriert je ein stirnseitig profilierter Distanzring 39 mit zwei einander diametral gegenüberliegenden Bohrungen gleichsinnig angeordnet sind, von denen jede dem ihr zugeordneten Anschluss 33 gegenübersteht. Zwischen den beiden sichtbaren, gleichen Distanzringen 39 befindet sich im Gehäusehohlraum 37 ein auf dessen in Fig. 2 unteren Anschluss 41 zentrierter Distanzring 39', der den Distanzringen 39 vollkommen gleicht. Jeder Distanzring 39 oder 39' weist ausser einer an seiner äusseren Umfangsfläche vorgesehenen Nut 43 zur Aufnahme des am Gehäuse 31 innen anliegenden O-Ringes 10 an seinem in Fig. 2 linken Ende einen Ringflansch 45 und an seinem in Fig. 2 rechten Ende einen radial innen liegenden axialen Fortsatz 47 auf, der in den Ringflansch 45 des benachbarten, axial anstossenden Distanzringes eingreift, wobei ein radialer Zwischenraum 49 und ein axialer Zwischenraum 51 bestehen bleiben. An der Wurzel des Fortsatzes 47 ist eine radial nach aussen offene Ringnut 53 eingearbeitet, die den exakt hineinpassenden Ringwulst 16 der Dichtung kraftschlüssig aufnimmt, deren im radialen Zwischenraum 49 angeordneter Ansatz 14 dort radiales Spiel und deren im axialen Zwischenraum 51 angeordneter Dichtungsring 12 dort axiales Spiel besitzen. Dabei wird der Ringwulst 16 unter elastischer Verformung vom Ringflansch 45 in die Ringnut 53 gepresst und berührt die äussere Stützkante 24 des Dichtungsringes 12 die radial innere Umfangsfläche des Ringflansches 45.

Bei unbelasteter Dichtung, das heisst bei entferntem Schieber 35, ragt die innere Dichtkante 22 radial nach innen über die inneren Berandungen der Distanzringe 39 und 39' vor. Bei einer hin und her gehenden axialen Bewegung des Schiebers 35, an dessen Umfangsfläche die innere Dichtkante 22 elastisch anliegt, kippt der Dichtungsring 12 infolge seines axialen Spiels um seine äussere Stützkante 24, deren Kreislinie der Berührung des Ringflansches 45 dabei axial hin und her wandert, was wegen der Anlenkung des Dichtungsringes 12 an dem Ringwulst 16 mittels des Ansatzes 14 möglich ist.

**Patentansprüche**

1. Mehrteilige Dichtung für in einem zylindrischen Gehäusehohlraum (37) bewegbare Ventilschieber (35); bestehend aus zwei gleichen, in den Hohlraum (37) eingepassten Distanzringen (39) mit je einer radial äusseren Umfangsnut (43), aus je einem in jeder Nut (43) angeordneten O-Ring (10) zur statischen Abdichtung der Distanzringe (39) gegen das Gehäuse (31) und aus einem zweiten Dichtungsring (12, 14, 16), der mit allen seinen axialen Abschnitten in einem von den Distanzringen (39) und dem Ventilschieber (35) begrenzten Raum (51) angeordnet ist und welcher aus einem elastischen Hauptring (12) mit, gegebenenfalls abgerundeter, radial innerer Dichtkante (28) zur dynamischen Abdichtung gegen den Ventilschieber (35), aus einem von den beiden Distanzringen (39) eingeklemmten Endteil (16) und aus einem diesen Endteil (16) mit dem Hauptring (12) verbindenden hohlzylindrischen Ansatz (14) am Hauptring (12) besteht, der eine zur inneren Dichtkante (22) konzentrische, gegebenenfalls abgerundete, radial äussere Stützkante (24) zur Abstützung des Hauptringes (12) an einem der Distanzringe (39) aufweist; wobei der Ansatz (14) mit radialem Spiel zwischen den beiden Distanzringen (39) radial eingeschlossen ist, dadurch gekennzeichnet, dass der Endteil als radial nach innen und aussen über den Ansatz (14) vorspringender Ringwulst (16) ausgebildet ist, der in einer radial offenen Ringnut (53) in einem der Distanzringe (30 und 39') axial verrastet ist und von dem anderen Distanzring radial belastet wird; und dass der Hauptring (12) mit axialem Spiel zwischen den beiden Distanzringen (39 und 39') axial eingeschlossen ist.

2. Dichtung nach Anspruch 1, dadurch gekennzeichnet, dass der Ringwulst (16) radial vorgespannt ist.

3. Dichtung nach Anspruch 1 oder 2, dadurch gekennzeichnet, dass der Ringwulst (16) als O-Ring ausgeformt ist.

4. Dichtung nach einem der Ansprüche 1 bis 3, dadurch gekennzeichnet, dass die den Ringwulst (16) aufnehmende Ringnut (53) radial nach aussen offen ist.

## Claims

1. Multi-part seal for a valve slide (35) adapted for movement in a cylindrical housing cavity (37) and consisting of two identical spacer rings (39) fitted into the cavity (37) and each having a radially outer peripheral groove (43), an O-ring (10) located in each groove (43) for the static sealing of the spacer rings (39) in respect of the housing (31) and a second sealing ring (12, 14, 16) all the axial portions of which are disposed in a space (51) defined by the spacer rings (39) and the valve slide (35) and which consists of an elastic main ring (12) with, possibly rounded off, a radially inner sealing edge (22) for dynamic sealing in respect of the valve slide (35), an end part (16) clamped between the two spacer rings (39) and, on the main ring (12), a hollow cylindrical shoulder connecting the end part (16) to the main ring (12), the latter having, concentric with the inner sealing edge (22) a possibly rounded off radially outer supporting edge (24) for supporting the main ring (12) on one of the spacer rings (39), the shoulder (14) being radially enclosed with radial clearance between the two spacer rings (39), characterized in that the end part is constructed as an annular bead (16) projecting radially inwardly and outwardly over the shoulder (14) and axially locked in a radially open annular groove (53) in one of the spacer rings (30 and 39′) and being subjected to a radial loading by the other spacer ring, and in that the main ring (12) is axially enclosed with axial clearance between the two spacer rings (39 and 39′).

2. Seal according to Claim 1, characterized in that the annular bead (16) is radially pretensioned.

3. Seal according to Claim 1 or 2, characterized in that the annular bead (16) is shaped as an O-ring.

4. Seal according to one of Claims 1 to 3, characterized in that the annular groove (53) accommodating the annular bead (16) is open radially outwardly.

## Revendications

1. Garniture d'étanchéité en plusieurs parties pour un tiroir de valve (35) mobile dans l'espace creux cylindrique (37) d'un boîtier; consistant en deux bagues distanceuses (39) égales, adaptées dans l'espace creux (37), avec chaque fois une rainure périphérique radialement extérieure (43); en chaque fois une bague torique (10) disposée dans chaque rainure (43) pour réaliser l'étanchéité statique des bagues distanceuses (39) par rapport au boîtier (31) et en une deuxième bague d'étanchéité (12, 14, 16) qui est disposée avec tous ses tronçons axiaux dans un espace (51) limité par les bagues distanceuses (39) et par le tiroir (35) de la valve, et qui consiste en une bague principale élastique (12) avec une arête d'étanchéité (22) radialement intérieure, éventuellement arrondie, pour réaliser l'étanchéité dynamique par rapport au tiroir (35) de la valve, en une partie d'extrémité (16) enserrée par les deux bagues distanceuses (39) et en un prolongement cylindrique creux (14) sur la bague principale (12), reliant cette partie d'extrémité (16) à la bague principale (12) qui présente une arête d'appui (24) radialement extérieure, éventuellement arrondie, concentrique par rapport à l'arête d'étanchéité intérieure (22), pour l'appui de la bague principale (12) à l'une des bagues distanceuses (39), le prolongement (14) étant pris radialement, avec jeu radial, entre les deux bagues distanceuses (39), caractérisée en ce que la partie d'extrémité est réalisée par un renflement annulaire (16) dépassant le prolongement (14) vers l'intérieur et vers l'extérieur, renflement qui est accroché axialement dans une rainure annulaire radialement ouverte (53) dans l'une des bagues distanceuses (39 et 39′) et qui est chargé radialement par l'autre bague distanceuse; et en ce que la bague principale (12) est enfermée axialement, avec jeu axial, entre les deux bagues distanceuses (39 et 39′).

2. Garniture d'étanchéité suivant la revendication 1, caractérisée en ce que le renflement annulaire (16) est mis radialement sous tension préalable.

3. Garniture d'étanchéité suivant la revendication 1 ou 2, caractérisée en ce que le renflement annulaire (16) est conformé, par moulage, en bague torique.

4. Garniture d'étanchéité suivant l'une quelconque des revendications 1 à 3, caractérisée en ce que la rainure annulaire (53) recevant le renflement annulaire (16) est ouverte radialement vers l'extérieur.

Fig.1

Fig.2

Fig.3